(19) Europäisches Patentamt
European Patent Office
Office européen des brevets

(11) EP 0 897 664 A1

(12) DEMANDE DE BREVET EUROPEEN

(43) Date de publication:
**24.02.1999 Bulletin 1999/08**

(51) Int. Cl.$^6$: **A01N 43/54**

(21) Numéro de dépôt: **97870125.8**

(22) Date de dépôt: **22.08.1997**

(84) Etats contractants désignés:
**AT BE CH DE DK ES FI FR GB GR IE IT LI LU MC NL PT SE**
Etats d'extension désignés:
**AL LT LV RO SI**

(71) Demandeur: **Chimac-Agriphar S.A.**
**4102 Ougree (BE)**

(72) Inventeurs:
- **Dutrecq, Olivier**
  **5030 Gembloux (BE)**
- **Lamproye, Jean-Luc**
  **4537 Bodegnee (BE)**

(74) Mandataire:
**Powis de Tenbossche, Roland et al**
**Bureau Vander Haeghen S.A.,**
**Rue Colonel Bourg 108A**
**1030 Bruxelles (BE)**

# (54) Composition fongicide

(57) Composition fongicide contenant au moins du chlorhydrate propyl 3-(dimethylamino) propylcarbamate et du méthyl(E)-2-2-6-(2 cyanophenoxy) pyrimdin-4-yloxyphenyl-3-methoxyacrylate, le rapport en poids chlorhydrate propyl 3-(dimethylamino) propylcarbamate / méthyl(E)-2-2-6-(2 cyanophenoxy) pyrimdin-4-yloxyphenyl-3-methoxyacrylate étant compris entre 0,05 et 20.

EP 0 897 664 A1

## Description

La présente invention a pour objet une association fongicide et des procédés de traitement de plantes, semences, supports infestés de champignons ou susceptible d'être infestés de champignons.

On connaît de nombreux agents fongicides. Par exemple le document EP-A-0382375 décrit des produits fongicides de formule générale suivante :

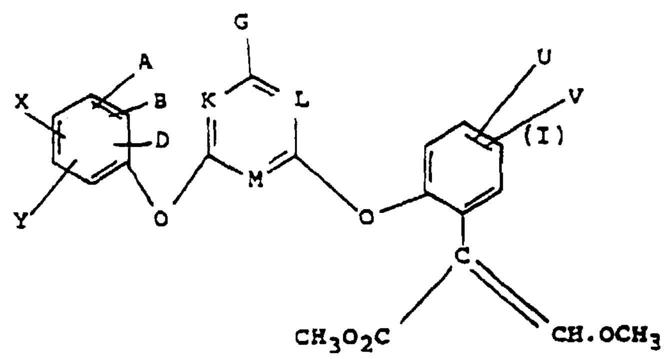

Selon ce document les produits répondant à cette formule peuvent être mélangés à d'autres fongicides connus choisis parmi la liste suivante : (RS)-1-aminopropylphosphonic acid. (RS)-4-(4-chlorophenyl)-2phenyl-2-(1H-1,2,4-triazol-1-ylmethyl) butyronitrile, (RS)-4-CHLORO-N-(cyano(ethoxy)methyl) benzamide. (Z)-N-but-2-enyloxymethyl-2-chloro-2', 6'-diethylacetanilide, 1-(2-cyano-2-methoxylminoacetyl)-3-ethyl urea, 1-[(2RS,4RS;2RS,4RS)-4-bromo-2-(2,4-dichlorophenyl) tetrahydrofurfuryl]1H-1,2,4-triazole, 3-(2,4-dichlorophenyl)-2-(1H-1,2,4-triazol-1-yl) quinazolin-4(3H)-one, 3-chloro-4-[4-methyl-2-(1H-1,2,4-triazol-1-methyl)-1,3-dioxolan-2-yl] phenyl-4-chlorophenyl ether, 4-bromo-2-cyano-N, N-dimethyl-6-trifluoromethylbenzimidazole-1-sulphonamide, 4-chlorobenzyl N-(2,4-dichlorophenyl)-2-(1H-1,2,4-triazol-1-yl)-thioacetamidate, 5-ethyl-5,8-dihydro-8-oxo(1,3-dioxolo(4,5-g) quinoline-7-carboxylic acid, alpha-[N-(3-chloro-2,6-xylyl)-2-methoxyacetamido]-gamma-butyrolactone, anilazine, benalaxyl, benomyl, biloxazol, binapacryl, biteranol, blasticidin S, bupirimate, buthiobate, captafol, captan, carbendazim, carboxin, chlorbenzthiazone, chloroneb, chlorothalonil, chlorozolinate, copper containing compounds such as copper oxychloride, copper sulphate and Bordeaux mixture, cycloheximide, cymoxanil, cyproconazole, cyprofuram, dl-2-pyridyl disulphide 1,1'-dioxide, dichlofluanid, dichlone, diclobutrazol, diclomezine, dicloran, dimethamorph, dimethirimol, diniconazole, dinocap, ditalimfos, dithianon, dodemorph, dodine, edifenphos, etaconazole, ethirimol, ethyl (Z)-N-benzyl-N-([methyl (methylthioethylideneamino-oxycarbony) amino] thio)-beta-alaninate, etridiazole, fenapanil, fenarimol, fenfuram, fenpiclonil, fenpropidin, fenpropimorph, fentin acetate, fentin hydroxide, flutolanil, flutriafol, fluzilazole, folpet, fosetyl-alluminium, fuberidazole, furalaxyl, furconazole-cis, guazatine, hexaconazole, hydroxyisoxazole, imazalil, iprobenfos, iprodione, isoprothiolane, kasugamycin, mancozeb, maneb, mepronil, metalaxyl, methfuroxam, metsulfovax, myclobutanil, N-(4-methyl-6-prop-1-ynylpyrimidin-2-yl) aniline, neoasozin, nickel dimethyldihiocarbamate, nitrothal-isopropyl, nuarimol, ofurace, organomercury compounds, oxadixyl, oxycarboxin, pefurazoate, penconazole, pencycuron, phenazin oxide, phthalide, polyoxin D, polyram, probenazole, prochloraz, procymidone, propamocarb, propiconazole, propineb, prothicarb, pyrazophos, pyrifenox, pyroquilon, pyroxyfur, pyrrolnitrin, quinomethionate, quintozene, streptomycin, sulphur, techlofthalam, tecnazene, tebuconazole, tetraconazole, thiabendazole, thiophanate-methyl, thiram, tolclofos-methyl, triacetate salf of 1,1'-imiodi (octamethylene) diguanidine, triadimefon, triadimenol, triazbutyl, tricyclazole, tridemorph, triforine, validamycin A, vinclozolin et zineb.

De plus, les produits répondant à la formule générale donnée ci-avant peuvent être mélangés à des insecticides connus. à des agents régulateurs de croissance, etc.

La présente invention est basée sur la sélection d'un fongicide particulier répondant à ladite formule générale de EP-A-0382375, à savoir le méthyl(E)-2-2-6-(2 cyanophenoxy) pyrimdin-4-yloxyphenyl-3-methoxyacrylate ou "azoxystrobin" et la sélection d'un fongicide particulier de la liste des autres fongicides donnée ci-avant, à savoir le propamocarb ou chlorhydrate propyl 3-(dimethylamino) propylcarbamate. On a remarqué qu'une composition contenant lesdits deux fongicides particuliers sélectionnés avait une efficacité de loin supérieure à la somme des effets des compositions contenant séparément lesdits fongicides.

La présente invention a pour objet une composition fongicide contenant au moins du chlorhydrate propyl 3-(dimethylamino) propylcarbamate et du méthyl(E)-2-2-6-(2 cyanophenoxy) pyrimdin-4-yloxyphenyl-3-methoxyacrylate, le rapport en poids chlorhydrate propyl 3-(dimethylamino) propylcarbamate / méthyl(E)-2-2-6-(2 cyanophenoxy) pyrimdin-4-yloxyphenyl-3-methoxyacrylate étant compris entre 0,05 et 20.

L'invention concerne donc un mélange fongicide avec une action synergique. Le produit contient comme éléments principaux, deux composants, qui lors d'un usage combiné (associé) s'influencent mutuellement et développent une action biologique qui dépasse la somme des effets lors d'une application séparée.
Ces effets sont à considérer comme une synergie.

Cette synergie entraîne pour les plantes une protection accrue contre de nombreux champignons.

Ces fongicides peuvent être appliqués pour protéger les plantes contre les deuteromycètes, zygomycètes, basidiomycètes, plasmodiophoraceae, ascomycètes, oomycètes et chytridiomycètes. Cette synergie permet également de diminuer les doses utilisées et évite dès lors le phénomène de résistance.

Le mélange présente également un large spectre de protection fongicide contre Aphanomyces, Bremia Peronospora, Phytophthora infestans, Pseudoperonospora.

Etant donné le spectre étendu, le produit peut s'appliquer aussi en dehors du traitement des plantes comme le traitement des semences et du sol.
Les doses d'utilisation du mélange varient de 100 à 5000 g par ha dans 25 à 2000 l d'eau. Le mélange peut être associé à d'autres produits phytopharmaceutiques.

De façon avantageuse, le rapport en poids chlorhydrate propyl 3-(dimethylamino) propylcarbamate / méthyl(E)-2-2-6-(2 cyanophenoxy) pyrimdin-4-yloxyphenyl-3-methoxyacrylate est compris entre 0,07 et 15.

Toutefois, de préférence, la composition contient plus de propamocarb que d'azoxystrobin. De préférence, le rapport en poids chlorhydrate propyl 3-(dimethylamino) propylcarbamate / méthyl(E)-2-2-6-(2 cyanophenoxy) pyrimdin-4-yloxyphenyl-3-methoxyacrylate est compris entre 2 et 15, de préférence entre 5 et 12.

Le rapport idéal du mélange dépend de la réceptivité et de la résistance des plantes ainsi que de l'époque de l'application, des conditions climatiques et de la nature du sol.
La composition suivant l'invention contient avantageusement un solvant organique, un tensioactif et d'autres additifs tels qu'enseignés aux pages 28 et 29 de EP 0382375, dont le contenu est incorporé dans la présente description par référence.
La composition se présente avantageusement sous la forme d'une solution ou d'une suspension ou d'une poudre mouillable ou de granulés dispersibles. Toutefois, elle peut se présenter sous la forme d'une poudre mouillable.
Par exemple, la composition se présente sous la forme d'un mélange de poudres de chlorhydrate propyl 3-(dimethylamino) propylcarbamate et de poudres de méthyl(E)-2-2-6-(2 cyanophenoxy) pyrimdin-4-yloxyphenyl-3-methoxyacrylate, et/ou sous forme de particules de chlorhydrate propyl 3-(dimethylamino) propylcarbamate recouvertes de particules en poudre de méthyl(E)-2-2-6-(2 cyanophenoxy) pyrimdin-4-yloxyphenyl-3-methoxyacrylate et/ou. sous forme de particules de chlorhydrate propyl 3-(dimethylamino) propylcarbamate contenant du méthyl(E)-2-2-6-(2 cyanophenoxy) pyrimdin-4-yloxyphenyl-3-methoxyacrylate sous forme liquide.

L'invention a également pour objet un procédé pour traiter préventivement des plantes, des semences, des supports, des supports poreux, contre l'apparition de champignons, dans lequel on traite (par pulvérisation, par injection dans la plante ou semences, par saupoudrage, épandage, etc) les plantes, semences ou supports au moyen de chlorhydrate propyl 3-(dimethylamino) propylcarbamate et de méthyl(E)-2-2-6-(2 cyanophenoxy) pyrimdin-4-yloxyphenyl-3-methoxyacrylate, appliqué simultanément ou successivement.
Un autre objet de l'invention est un procédé pour traiter (par pulvérisation, par injection dans la plante ou semences, par saupoudrage, épandage, etc) des plantes, des semences, des supports, des supports poreux, contaminés par des champignons, dans lequel on traite les plantes, semences ou supports au moyen de chlorhydrate propyl 3-(dimethylamino) propylcarbamate et de méthyl(E)-2-2-6-(2 cyanophenoxy) pyrimdin-4-yloxyphenyl-3-methoxyacrylate, appliqués simultanément ou successivement (par exemple premier traitement au propamocarb suivi d'un traitement ultérieur à l'azoxystrobin.
De façon avantageuse, dans les procédés selon l'invention, on pulvérise les plantes, semences, supports au moyen d'une solution ou suspension contenant du chlorhydrate propyl 3-(dimethylamino) propylcarbamate et du méthyl(E)-2-2-6-(2 cyanophenoxy) pyrimdin-4-yloxyphenyl-3-methoxyacrylate. Selon une forme de traitement particulier, on traite dans une première étape les plantes, semences ou supports au moyen de chlorhydrate propyl 3-(dimethylamino) propylcarbamate, et en ce que dans une deuxième étape, on pulvérise les plantes, semences, supports au moyen d'une solution ou suspension contenant du chlorhydrate propyl 3-(dimethylamino) propylcarbamate et du méthyl(E)-2-2-6-(2 cyanophenoxy) pyrimdin-4-yloxyphenyl-3-methoxyacrylate.

La composition suivant l'invention, sous forme liquide, sous forme de poudre ou sous forme de pate, peut être utilisé en tant que préparation pharmaceutique pour le traitement de mycoses. En effet, vu l'efficacité remarquable du traitement, les doses de chlorhydrate propyl 3-(dimethylamino) propylcarbamate et de méthyl(E)-2-2-6-(2 cyanophenoxy) pyrimdin-4-yloxyphenyl-3-methoxyacrylate à utiliser sont faibles.

Des compositions suivant l'invention seront décrites ci-après :

**EXEMPLES 1 à 3**

On a préparé une solution de chlorhydrate propyl 3-(dimethylamino) propylcarbamate et de méthyl(E)-2-2-6-(2 cyanophenoxy) pyrimdin-4-yloxyphenyl-3-methoxyacrylate de la manière suivante.
On a dissous du chlorhydrate propyl 3-(dimethylamino) propylcarbamate (Propa.) et du méthyl(E)-2-2-6-(2 cyanophenoxy) pyrimdin-4-yloxyphenyl-3-methoxyacrylate (Azoxy.) dans une solution aqueuse contenant divers additifs. Le tableau suivant donne les concentrations en % en poids des agents fongicides des solutions préparées.

| | Propa. | Azoxy |
|---|---|---|
| 1 | 50 | 5 |
| 2 | 30 | 25 |
| 3 | 45 | 10 |

La composition (% en poids) des solutions aqueuses fongicides préparées était : 55 % de Propa + Azoxy, 0,2 % d'alkaryl polyglycolether, 1 % sel de sodium d'un condensat d'acide naphtalène sulfonique et de formaldéhyde, 2,2 % stabilisant, 1 % agent épaississant, 0,2 % émulsion anti-mousse, 3,4 % glycol et 37 % eau.

**EXEMPLE 4**

On a préparé une poudre mouillable en mélangeant 900 g d'un mélange poudreux contenant 91 % de Propamocarb et 9 % d'Azoxystrobin, 70 g de Kaolin et 30 g de sels sodiques des N-méthyl-N-olcyl-tourines et de sels calciques des acides lignosulfoniques.

**EXEMPLE 5**

On a préparé une poudre à poudrer en mélangeant 200 g d'un mélange poudreux contenant 91 % de Propamocarb et 9 % d'Azoxystrobin, 680 g de talc, 100 g d'agent d'adhérence et 20 g d'agent dispersant (à base par exemple de condensat d'acide gras).

**EXEMPLE 6**

On a préparé une composition de protection pour le bois en ajoutant à un litre de CUPRINOL vendu dans le commerce 20 g de chlorhydrate propyl 3-(dimethylamino) propylcarbamate et 2 g de méthyl(E)-2-2-6-(2 cyanophenoxy) pyrimdin-4-yloxyphenyl-3-methoxyacrylate.

**EXEMPLE DE TRAITEMENT**

Les essais suivants démontrent des résultats surprenants en protection fongicide qui dépassent largement les effets atteints avec un des deux composants appliqués séparément. Il s'agit donc bien d'un effet synergique qui n'était pas connu jusqu'à ce jour.
Pour déterminer l'effet synergique, il est fait référence à la méthode de S.R. COLBY "Calculating Synergistic and Antagonistic Responses of Herbicide Combinations", Weeds 15/1 (1967), pages 20-22. Cette formule se présente comme suit :

$$E = X + Y - (X.Y/100)$$

X = pourcentage de l'efficacité fongicide avec la substance a) à la dose de p kg s.a./ha
Y = pourcentage de l'efficacité fongicide avec la substance b) à la dose de q kg s.a./ha
E = efficacité attendue du mélange des substances a) et b) à la dose de p + q kg s.a./ha

Le mélange présente une synergie si la valeur obtenue lors des essais est supérieure à la valeur attendue E.
L'essai en champ (St Amand, Belgique) a été effectué pour estimer l'efficacité de substances pour le contrôle de Phytophtora infestans en pommes de terre. L'essai a été réalisé sur des parcelles de ± 25 $m^2$ avec 4 répétitions.
Les produits ont été appliqués par pulvérisation après dilution dans l'eau pour obtenir les concentrations en

substance active désirées (volume de bouillie de 300 l/ha).
Les parcelles ont été traitées tous les 7 jours avec les différents produits. L'efficacité des traitements a été déterminée lorsque les parcelles non traitées (parcelles témoin) ont été entièrement détruites par la maladie.

| Traitements dose (g/ha) | | Efficacité (moyenne des 4 répétitions) | |
|---|---|---|---|
| Propamocarb | Azoxistrobin | Obtenue lors de l'essai | Attendue (E) |
| 1000 | 0 | 7.5 (X) | - |
| 0 | 100 | 46.9 (Y) | - |
| 1000 | 100 | 93.5 | 50.9 |

L'efficacité observée du mélange est de 42 % supérieure à l'efficacité attendue. Cela met en évidence une forte et inattendue synergie entre les deux substances.

## Revendications

1. Composition fongicide contenant au moins du chlorhydrate propyl 3-(dimethylamino) propylcarbamate et du méthyl(E)-2-2-6-(2 cyanophenoxy) pyrimdin-4-yloxyphenyl-3-methoxyacrylate, le rapport en poids chlorhydrate propyl 3-(dimethylamino) propylcarbamate / méthyl(E)-2-2-6-(2 cyanophenoxy) pyrimdin-4-yloxyphenyl-3-methoxyacrylate étant compris entre 0,05 et 20.

2. Composition suivant la revendication 1, caractérisée en ce que le rapport en poids chlorhydrate propyl 3-(dimethylamino) propylcarbamate / méthyl(E)-2-2-6-(2 cyanophenoxy) pyrimdin-4-yloxyphenyl-3-methoxyacrylate est compris entre 0,07 et 15.

3. Composition suivant la revendication 1, caractérisée en ce que le rapport en poids chlorhydrate propyl 3-(dimethylamino) propylcarbamate / méthyl(E)-2-2-6-(2 cyanophenoxy) pyrimdin-4-yloxyphenyl-3-methoxyacrylate est compris entre 2 et 15, de préférence entre 5 et 12.

4. Composition suivant l'une des revendications précédentes, caractérisée en ce qu'elle contient un solvant organique.

5. Composition suivant l'une des revendications précédentes, caractérisée en ce qu'elle contient un agent tensioactif.

6. Composition suivant l'une des revendications précédentes, caractérisée en ce qu'elle se présente sous la forme d'une solution ou d'une suspension.

7. Composition suivant l'une des revendications 1 à 5, caractérisée en ce qu'elle se présente sous la forme d'une poudre mouillable ou de granulés dispersibles.

8. Composition suivant la revendication 7, caractérisée en ce qu'elle se présente sous la forme d'un mélange de poudres de chlorhydrate propyl 3-(dimethylamino) propylcarbamate et de poudres de méthyl(E)-2-2-6-(2 cyanophenoxy) pyrimdin-4-yloxyphenyl-3-methoxyacrylate.

9. Composition suivant la revendication 7, caractérisée en ce qu'elle se présente sous forme de particules de chlorhydrate propyl 3-(dimethylamino) propylcarbamate recouvertes de particules en poudre de méthyl(E)-2-2-6-(2 cyanophenoxy) pyrimdin-4-yloxyphenyl-3-methoxyacrylate.

10. Composition suivant la revendication 7, caractérisée en ce qu'elle se présente sous forme de particules de chlorhydrate propyl 3-(dimethylamino) propylcarbamate contenant du méthyl(E)-2-2-6-(2 cyanophenoxy) pyrimdin-4-yloxyphenyl-3-methoxyacrylate sous forme liquide.

11. Procédé pour traiter préventivement des plantes, des semences, des supports, des supports poreux, contre l'apparition de champignons, dans lequel on traite les plantes, semences ou supports au moyen de chlorhydrate propyl

3-(dimethylamino) propylcarbamate et de méthyl(E)-2-2-6-(2 cyanophenoxy) pyrimdin-4-yloxyphenyl-3-methoxyacrylate, appliqué simultanément ou successivement.

**12.** Procédé pour traiter des plantes, des semences, des supports, des supports poreux, contaminés par des champignons, dans lequel on traite les plantes, semences ou supports au moyen de chlorhydrate propyl 3-(dimethylamino) propylcarbamate et de méthyl(E)-2-2-6-(2 cyanophenoxy) pyrimdin-4-yloxyphenyl-3-methoxyacrylate, appliqué simultanément ou successivement.

**13.** Procédé suivant la revendication 11 ou 12, caractérisé en ce qu'on pulvérise les plantes, semences, supports au moyen d'une solution ou suspension contenant du chlorhydrate propyl 3-(dimethylamino) propylcarbamate et du méthyl(E)-2-2-6-(2 cyanophenoxy) pyrimdin-4-yloxyphenyl-3-methoxyacrylate.

**14.** Procédé suivant la revendication 13, caractérisé en ce qu'on traite dans une première étape les plantes, semences ou supports au moyen de chlorhydrate propyl 3-(dimethylamino) propylcarbamate, et en ce que dans une deuxième étape, on pulvérise les plantes, semences, supports au moyen d'une solution ou suspension contenant du chlorhydrate propyl 3-(dimethylamino) propylcarbamate et du méthyl(E)-2-2-6-(2 cyanophenoxy) pyrimdin-4-yloxyphenyl-3-methoxyacrylate.

Office européen des brevets

# RAPPORT DE RECHERCHE EUROPEENNE

Numéro de la demande
EP 97 87 0125

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP 0 382 375 A (ICI) 16 août 1990 ----- | | A01N43/54 |

| DOMAINES TECHNIQUES RECHERCHES (Int.Cl.6) |
|---|
| A01N |

Le présent rapport a été établi pour toutes les revendications

| Lieu de la recherche | Date d'achèvement de la recherche | Examinateur |
|---|---|---|
| LA HAYE | 19 janvier 1998 | Fort, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)